# EUROPÄISCHE PATENTSCHRIFT

(11) **EP 3 698 852 B1**
(45) Veröffentlichungstag und Bekanntmachung des Hinweises auf die Patenterteilung: **01.11.2023**
(21) Anmeldenummer: 19158052.1
(22) Anmeldetag: 19.02.2019
(51) Int. Cl.: A62C 2/06, F16L 5/04

(54) **BRANDSCHUTZVORRICHTUNG**
FIRE PROTECTION DEVICE
DISPOSITIF DE PROTECTION CONTRE L'INCENDIE

(43) Veröffentlichungstag der Anmeldung: 26.08.2020
(73) Patentinhaber: Dallmer GmbH & Co. KG, 59757 Arnsberg (DE)
(72) Erfinder: DALLMER, Johannes, 59757 Arnsberg (DE)
(74) Vertreter: Schäperklaus, Jochen

(56) Entgegenhaltungen:
- WO-A1-2018/164095
- BE-A5- 1 018 652
- DE-U1- 20 200 625

## Beschreibung

Die vorliegende Erfindung betrifft ein System mit einer Brandschutzvorrichtung mit einem elastisch verformbaren Grundkörper und intumeszierendem Material.

Es sind Brandschutzvorrichtungen bekannt, die dazu genutzt werden, Durchführungen in Wänden, Böden oder Decken im Brandfall abzudichten. Dies soll zum einen die Verbreitung von Rauch und zum anderen die Ausbreitung des Feuers erschweren oder verhindern.

Die BE 1 018 652 A5 offenbart eine Feuer- und Rauchschutzklappenstruktur, die im Falle eines Feuers mit einer Verschlusskappe verschlossen wird. Diese Verschlusslösung kann auch als wasserdichter Kontrollverschluss verwendet werden. Eine Dichtlippe einer flexiblen Dichtung funktioniert in einem frühen Stadium als Rauchschutzventil, wenn die aufblasbare Dichtung noch nicht auf die erhöhte Temperatur reagiert hat.

Die DE 202 00 625 U1 offenbart eine Vorrichtung zum Ausrüsten oder nachträglichen Umrüsten eines einen Ablaufrohrstutzen umfassenden Bodenablaufes mit einer Brandschutzvorrichtung als Vorkehrung gegen eine Übertragung von Feuer ohne eine aufwändige Demontage des Bodenablaufes.

Die WO 2018/164095 A1 offenbart eine feuerfeste Formmasse, die ein Element mit einem Elastizitätsmodul von 600 MPa oder mehr und ein anderes Element mit einem Ausdehnungsverhältnis von 10 oder mehr umfasst.

In DE 10 2010 030 836 B4 wird eine Brandschutzvorrichtung für eine Bodendurchführungen mit einem hitze- und druckstabilen Grundkörper offenbart, an dem intumeszierendes Material angeordnet ist. Im Brandfall dehnt sich das intumeszierende Material aus und verschließt so den Spalt zwischen einem Ablaufbauteil und dem Boden.

Demgegenüber liegt der Erfindung die Aufgabe zugrunde, ein einfacher aufgebautes und kostengünstiger herzustellendes System zu schaffen.

Diese Aufgabe wird durch ein System gemäß Anspruch 1 gelöst. Ausführungsformen der Erfindung sind in den abhängigen Ansprüchen angegeben.

Das System umfasst eine Brandschutzvorrichtung zum Einsatz in eine Wand-, Boden- oder Deckendurchführung und ein in der Wand-, Boden- oder Deckendurchführung angeordnetes Ablaufbauteil. Die Brandschutzvorrichtung umfasst einen elastisch verformbaren Grundkörper und am Grundkörper angeordnetes intumeszierendes Material. Unter dem Begriff "elastisch verformbar" wird im Rahmen dieser Beschreibung insbesondere verstanden, dass der Grundkörper beim Einsetzen in einen Zwischenraum zwischen einem Ablaufbauteil und einer Wand, einem Boden oder einer Decke elastisch verformt wird und aufgrund der elastischen Rückstellkraft in dem Zwischenraum gehalten wird. Der Grundkörper kann beispielsweise ein Elastomer umfassen oder aus einem Elastomer bestehen. Vorzugsweise besteht der Grundkörper aus einem oder mehreren Materialien, die ein Elastizitätsmodul von weniger als 7GPa aufweisen.

Der Grundkörper umfasst eine erste Dichtlippe. Die erste Dichtlippe kann beispielsweise ein verjüngtes Ende des Grundkörpers umfassen oder durch das verjüngte Ende gebildet werden. Das verjüngte kann sich dabei nach außen erstrecken. Der Begriff "außen" wird dabei im Rahmen dieser Beschreibung insbesondere so verstanden, dass die Richtung gemeint ist, in der beim bestimmungsgemäßen Gebrauch der Brandschutzvorrichtung die Wand, die Decke oder der Boden angeordnet ist.

Die erste Dichtlippe dient der sicheren Abdichtung des Spalts zwischen einem Ablaufbauteil und der Wand, dem Boden oder der Decke, wenn das intumeszierende Bauteil noch nicht aufgrund von Hitzeeinwirkung sein Volumen vergrößert hat.

Im Brandfall gelangen üblicherweise Rauch und Hitze an die Brandschutzvorrichtung. Der elastisch verformbare Grundkörper dichtet die Durchführung gegen den Rauch ab, solange der Grundkörper nicht zu stark erhitzt wird. Bei zu starker Erhitzung schmilzt der Grundkörper und eine zuverlässige Abdichtung kann alleine durch die Verwendung des Grundkörpers nicht mehr sichergestellt werden. Bei einer solche starken Erhitzung dehnt sich jedoch das intumeszierende Material aus und dichtet die Durchführung ab. Es ist somit zunächst bei relativ geringer oder gar keiner Erhitzung durch den Grundkörper sichergestellt, dass kein oder nur sehr wenig Rauch durch die Durchführung gelangen kann. Wenn die Brandschutzvorrichtung dann erhitzt wird, verliert der Grundkörper die Dichtwirkung, die dann jedoch durch das intumeszierende Material sichergestellt wird.

Die Brandschutzvorrichtung ist besonders einfach aufgebaut und es ist relativ wenig intumeszierendes Material für eine zuverlässige Funktionsweise notwendig, da im nicht oder wenig erhitzten Zustand die Abdichtung durch den Grundkörper erreicht wird. Daher ist die Brandschutzvorrichtung besonders kostengünstig herstellbar.

Das intumeszierende Material kann insbesondere stoffschlüssig am Grundkörper befestigt sein. Es kann beispielsweise einstückig und/oder einteilig ausgebildet sein.

Der Grundkörper weist eine Außenseite und eine Innenseite auf. Die Außenseite ist der Wand, dem Boden oder der Decke zugewandt. Die Innenseite ist von der Wand, dem Boden oder der Decke weg gerichtet. Sie kann beispielsweise einem Ablaufbauteil zugewandt sein, das innerhalb der Durchführung angeordnet ist.

Das intumeszierende Material ist an der Außenseite des Grundkörpers angeordnet. Es ist insbesondere möglich, dass die Innenseite des Grundkörpers frei von intumeszierendem Material ist. Bevorzugterweise ist das intumeszierende Material ausschließlich an der Außenseite angeordnet.

Die Anordnung des intumeszierenden Materials an der Außenseite hat insbesondere den Vorteil, dass relativ wenig intumeszierendes Material benötigt wird, wodurch sich der Aufbau der Brandschutzvorrichtung vereinfacht und die Herstellung kostengünstiger wird.

Der Grundkörper ist einteilig und/oder einstückig ausgebildet. Dies ist ein besonders einfach herzustellender Grundkörper.

Das Ablaufbauteil kann auch mehrere voneinander lösbare Elemente umfassen. Die Brandschutzvorrichtung ist in einem elastisch verformten Zustand des Grundkörpers zwischen dem Ablaufbauteil und der Wand, dem Boden oder der Decke angeordnet. Die elastische Rückstellkraft des Grundkörpers kann dabei die Brandschutzvorrichtung in dieser Position halten. Die Brandschutzvorrichtung ist dann zwischen der Wand, dem Boden oder der Decke und dem Ablaufbauteil eingeklemmt.

Nach einer Ausführungsform der Erfindung kann der Grundkörper ringförmig ausgebildet sein. Dies ist insbesondere vorteilhaft, da Ablaufbauteile, die durch die Durchführung hindurchragen, häufig ebenfalls ringförmig ausgebildet sind. Der Grundkörper kann dann umlaufend um das Ablaufbauteil und äquidistant zum Ablaufbauteil angeordnet werden.

Nach einer Ausführungsform der Erfindung kann das intumeszierende Material ringförmig ausgebildet sein. Dies ist insbesondere vorteilhaft, wenn der Grundkörper ebenfalls ringförmig ausgebildet ist.

Nach einer Ausführungsform der Erfindung kann eine Querschnittsfläche des Grundkörpers einen, vorzugsweise im Wesentlichen, U-förmigen Abschnitt aufweisen. Hierunter wird verstanden, dass der Grundkörper im Querschnitt zwei durch einen Steg miteinander verbundene Schenkel aufweist, die, vorzugsweise in etwa, senkrecht vom Steg nach außen abstehen. Die Schenkel können dabei jeweils an einander gegenüberliegenden Enden des Stegs angeordnet sein. Es ist beispielsweise möglich, dass sich die erste Dichtlippe an einen ersten der Schenkel direkt anschließt.

Das intumeszierende Material kann innerhalb des U-förmigen Abschnitts angeordnet sein. Es kann also beispielsweise an drei Seiten vom Steg und den Schenkeln umgeben sein. Auf diese Weise wird eine besonders gute Befestigung des intumeszierenden Materials am Grundkörper erreicht.

Nach einer Ausführungsform der Erfindung kann die Brandschutzvorrichtung eine zweite Dichtlippe umfassen. Die erste Dichtlippe kann dabei beispielsweise nach außen und die zweite Dichtlippe nach innen ragen. Vorzugsweise sind die erste und die zweite Dichtlippe im in der Boden- oder Deckendurchführung eingesetzten Zustand der Brandschutzvorrichtung auf der gleichen Höhe angeordnet, sodass eine zuverlässige Abdichtung der Durchführung erreicht wird. Die zweite Dichtlippe kann beispielsweise ein verjüngtes Ende des Grundkörpers umfassen oder durch das verjüngte Ende gebildet werden.

Nach einer Ausführungsform der Erfindung kann die Brandschutzvorrichtung eine dritte Dichtlippe umfassen. Die erste Dichtlippe kann oberhalb des intumeszierenden Materials und die dritte Dichtlippe unterhalb des intumeszierenden Materials angeordnet sein. Die Begriffe "oberhalb" und "unterhalb" beziehen sich dabei insbesondere auf die Richtungen beim bestimmungsgemäßen Gebrauch der Brandschutzvorrichtung in einer Decken- oder Bodendurchführung. Beispielsweise kann sich die dritte Dichtlippe an einen zweiten der Schenkel des Grundkörpers anschließen. Die dritte Dichtlippe kann ein verjüngtes Ende des Grundkörpers umfassen oder durch das verjüngte Ende gebildet werden. Die dritte Dichtlippe erhöht die Dichtigkeit der Brandschutzvorrichtung weiter.

Nach einer Ausführungsform der Erfindung kann das Ablaufbauteil einen Aufnahmespalt aufweisen. Die zweite Dichtlippe der Brandschutzvorrichtung kann dazu ausgebildet sein, im zwischen dem Ablaufbauteil und der Wand, dem Boden oder der Decke angeordneten Zustand der Brandschutzvorrichtung in den Aufnahmespalt hineinzuragen. Dies ist insbesondere vorteilhaft für einen besonders sicheren Halt der Brandschutzvorrichtung. Außerdem wird die Dichtigkeit nochmals erhöht.

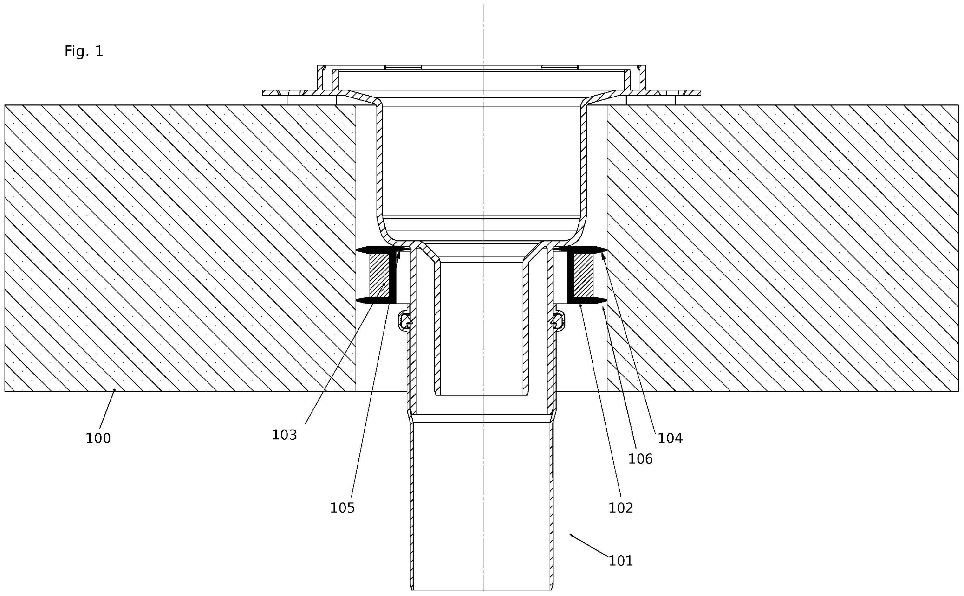

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche und ähnliche Bauteile und für Bauteile mit gleichen oder ähnlichen Funktionen dieselben Bezugszeichen verwendet. Darin zeigt
- Fig. 1: eine schematische Schnittansicht eines Systems nach einer Ausführungsform der Erfindung.

Der Boden 100 weist eine Durchführung auf, in der ein Ablaufbauteil 101 angeordnet ist, das aus mehreren Elementen besteht. In einem Spalt zwischen dem Boden 100 und dem Ablaufbauteil 101 ist ein elastisch verformbarer Grundkörper 102 angeordnet, der elastisch verformt ist und aufgrund der elastischen Rückstellkraft in der dargestellten Position gehalten wird. Er ist zwischen dem Ablaufbauteil 101 und dem Boden 100 eingeklemmt. Der Grundkörper 102 kann beispielsweise aus einem Elastomer und/oder einem oder mehreren Kunststoffen bestehen.

Der Grundkörper 102 ist ringförmig ausgebildet und weist im Querschnitt einen U-förmigen Abschnitt auf. Der U-förmige Abschnitt umfasst einen Steg und zwei Schenkel. Die Schenkel sind an einander gegenüberliegenden Enden des Stegs angeordnet. Der Steg erstreckt sich in der Durchführung von unten nach oben. Die Schenkel erstrecken sich in einer horizontalen Richtung nach außen weg vom Ablaufbauteil 101 in Richtung des Bodens 100.

Zwischen den Schenkeln ist das intumeszierende Material 103 ringförmig angeordnet, das stoffschlüssig mit dem Grundkörper 102 verbunden ist. Das intumeszierende Material 103 ist dabei sowohl an den Schenkeln als auch am Steg angeordnet. Zwischen dem Grundkörper 102 und dem Ablaufbauteil 101 ist kein intumeszierendes Material angeordnet.

Der Grundkörper 102 umfasst außerdem eine erste Dichtlippe 104, eine zweite Dichtlippe 105 und eine dritte Dichtlippe 106. Die erste Dichtlippe 104 schließt sich an einen ersten der Schenkel an und umfasst ein erstes verjüngtes Ende des Grundkörpers 102. Sie ist oberhalb des intumeszierenden Materials 103 angeordnet und erstreckt sich nach außen in Richtung des Bodens 100.

Die zweite Dichtlippe 105 ragt in einen Aufnahmespalt des Ablaufbauteils 101. Sie erstreckt sich vom oberen Ende des Stegs nach innen in Richtung des Ablaufbauteils 101. Die zweite Dichtlippe 105 umfasst ein zweites verjüngtes Ende des Grundkörpers 102. Die zweite Dichtlippe 105 ist auf der gleichen Höhe angeordnet wie die erste Dichtlippe 104. Da die zweite Dichtlippe 105 in den Aufnahmespalt hineinragt, sorgt sie für einen sicheren Halt der Brandschutzvorrichtung am Ablaufbauteil 101.

Die dritte Dichtlippe 106 schließt sich an einen zweiten der Schenkel an und umfasst ein drittes verjüngtes Ende des Grundkörpers 102.Die dritte Dichtlippe 106 ist unterhalb des intumeszierenden Materials 103 angeordnet und erstreckt sich nach außen in Richtung des Bodens 100. Die dritte Dichtlippe 106 ist unterhalb der ersten Dichtlippe 104 angeordnet.

Die drei Dichtlippen 104-106 dichten die Durchführung ab und erschweren oder verhindern ein Verrutschen der Brandschutzvorrichtung.

Im Brandfall tritt zunächst Rauch in die Durchführung ein. Durch die Dichtlippen 104-106 wird verhindert oder zumindest erschwert, dass der Rauch durch die Durchführung hindurchströmen kann. Wenn die Brandschutzvorrichtung erhitzt wird, dehnt sich das intumeszierende Material 103 aus, während der Grundkörper 102 aufgrund des gewählten Materials die Durchführung nach einer bestimmten Zeit nicht mehr abdichten kann. Wenn dieser Fall eintritt, hat sich das intumeszierende Material 103 jedoch so weit ausgedehnt, dass es die Durchführung auch vollkommen unabhängig vom Zustand des Grundkörpers 102 abdichtet.

Zunächst sorgt also im relativ kalten Zustand der Brandschutzvorrichtung der Grundkörper 102 mit den Dichtlippen 104-106 für eine zuverlässige Abdichtung gegenüber Rauch. Wenn die Brandschutzvorrichtung stark erhitzt wird, dehnt sich das intumeszierende Material 103 aus und sorgt für die zuverlässige Abdichtung gegenüber Rauch und Feuer. Dass der Grundkörper 102 aufgrund seines Materials dann kaum oder gar nichts mehr zur Abdichtung beiträgt fällt nicht oder nur unwesentlich ins Gewicht.

## Patentansprüche

1. System, umfassend eine Brandschutzvorrichtung zum Einsatz in eine Wand-, Boden- oder Deckendurchführung und ein in der Wand-, Boden- oder Deckendurchführung angeordnetes Ablaufbauteil (101), wobei die Brandschutzvorrichtung einen elastisch verformbaren Grundkörper (102) und intumeszierendes Material (103) umfasst, wobei das intumeszierende Material (103) am Grundkörper (102) angeordnet ist, und wobei der Grundkörper (102) eine erste Dichtlippe (104) umfasst, wobei der Grundkörper (102) eine Außenseite und eine Innenseite aufweist, wobei die Außenseite der Wand, dem Boden oder der Decke zugewandt ist, wobei die Innenseite von der Wand, dem Boden oder der Decke weg gerichtet ist, wobei das intumeszierende Material (103) an der Außenseite angeordnet ist, wobei der Grundkörper (102) einteilig und/oder einstückig ausgebildet ist, **dadurch gekennzeichnet, dass** die Brandschutzvorrichtung in einem elastisch verformten Zustand des Grundkörpers (102) zwischen dem Ablaufbauteil (101) und der Wand, dem Boden (100) oder der Decke angeordnet ist.

2. System nach Anspruch 1, **dadurch gekennzeichnet, dass** die erste Dichtlippe (104) über das intumeszierende Material hinausragt.

3. System nach einem der vorherigen Ansprüche, **dadurch gekennzeichnet, dass** der Grundkörper (102) ringförmig ausgebildet ist.

4. System nach einem der vorherigen Ansprüche, **dadurch gekennzeichnet, dass** das intumeszierende Material (103) ringförmig ausgebildet ist.

5. System nach einem der vorherigen Ansprüche, **dadurch gekennzeichnet, dass** eine Querschnittsfläche des Grundkörpers (102) einen im Wesentlichen U-förmigen Abschnitt aufweist, wobei das intumeszierende Material (103) innerhalb des U-förmigen Abschnitts angeordnet ist.

6. System nach einem der vorherigen Ansprüche, **dadurch gekennzeichnet, dass** die Brandschutzvorrichtung eine zweite Dichtlippe (105) umfasst, wobei die erste Dichtlippe (104) nach außen ragt, und wobei die zweite Dichtlippe (105) nach innen ragt.

7. System nach einem der vorherigen Ansprüche, **dadurch gekennzeichnet, dass** die Brandschutzvorrichtung eine dritte Dichtlippe (106) umfasst, wobei die erste Dichtlippe (104) oberhalb des intumeszierenden Materials (103) und die dritte Dichtlippe (106) unterhalb des intumeszierenden Materials (103) angeordnet ist.

8. System nach einem der vorherigen Ansprüche, **dadurch gekennzeichnet, dass** das Ablaufbauteil (101) einen Aufnahmespalt aufweist, wobei die zweite Dichtlippe (105) der Brandschutzvorrichtung dazu ausgebildet ist, im zwischen dem Ablaufbauteil (101) und der Wand, dem Boden (100) oder der Decke angeordneten Zustand der Brandschutzvorrichtung in den Aufnahmespalt hineinzuragen.

## Claims

1. System comprising a fire protection device for use in a wall, floor or ceiling feed-through and a drain component (101) arranged in the wall, floor or ceiling feed-through, wherein the fire protection device includes an elastically deformable base body (102) and intumescent material (103), wherein the intumescent material (103) is arranged on the base body (102) and wherein the base body (102) has a first sealing lip (104), wherein the base body (102) has an outer side and an inner side, wherein the outer side faces the wall, the floor or the ceiling, wherein the inner side is directed away from the wall, the floor or the ceiling, wherein the intumescent material (103) is arranged on the outer side, wherein the base body (102) is integral and/or single-piece in form, **characterised in that** the fire protection device is arranged in an elastically deformed state of the base body (102) between the drain component (101) and the wall, the floor (100) or the ceiling.

2. System according to claim 1, **characterised in that** the first sealing lip (104) projects beyond the intumescent material.

3. System according to any of the preceding claims, **characterised in that** the base body (102) is annular in form.

4. System according to any of the preceding claims, **characterised in that** the intumescent material (103) is annular in form.

5. System according to any of the preceding claims, **characterised in that** a cross-sectional surface of the base body (102) has a substantially U-shaped portion, wherein the intumescent material (103) is arranged within the U-shaped portion.

6. System according to any of the preceding claims, **characterised in that** the fire protection device comprises a second sealing lip (105), wherein the first sealing lip (104) protrudes to the outside, and wherein the second sealing lip (105) protrudes to the inside.

7. System according to any of the preceding claims, **characterised in that** the fire protection device comprises a third sealing lip (106), wherein the first sealing lip (104) is arranged above the intumescent material (103) and the third sealing lip (106) is arranged below the intumescent material (103).

8. System according to any of the preceding claims, **characterised in that** the drain component (101) has a receiving gap, wherein the second sealing lip (105) of the fire protection device is configured, in the state of the fire protection device in which it is arranged between the drain component (101) and the wall, the floor (100) or the ceiling, to protrude into the receiving gap.

## Revendications

1. Système comprenant un dispositif de protection contre l'incendie pour l'utilisation dans une traversée de mur, sol, ou plafond et un composant d'écoulement (101) agencé dans la traversée de mur, sol ou plafond, dans lequel le dispositif de protection contre l'incendie comporte un corps de base (102) déformable élastiquement et du matériau intumescent (103), dans lequel le matériau intumescent (103) est agencé au niveau du corps de base (102), et dans lequel le corps de base (102) comporte une première lèvre d'étanchéité (104), dans lequel le corps de base (102) présente un côté extérieur et un côté intérieur, dans lequel le côté extérieur est tourné vers le mur, le sol ou le plafond, dans lequel le côté intérieur est éloigné du mur, du sol ou du plafond, dans lequel le matériau intumescent (103) est agencé au niveau du côté extérieur, dans lequel le corps de base (102) est réalisé en une partie et/ou d'un seul tenant, **caractérisé en ce que** le dispositif de protection contre l'incendie est agencé dans un état déformé élastiquement du corps de base (102) entre le composant d'écoulement (101) et le mur, le sol (100) ou le plafond.

2. Système selon la revendication 1, **caractérisé en ce que** la première lèvre d'étanchéité (104) dépasse du matériau intumescent.

3. Système selon l'une des revendications précédentes, **caractérisé en ce que** le corps de base (102) est réalisé en anneau.

4. Système selon l'une des revendications précédentes, **caractérisé en ce que** le matériau intumescent (103) est réalisé en anneau.

5. Système selon l'une des revendications précédentes, **caractérisé en ce qu'**une aire de section du corps de base (102) présente une section sensiblement en U, dans lequel le matériau intumescent (103) est agencé à l'intérieur de la section en U.

6. Système selon l'une des revendications précédentes, **caractérisé en ce que** le dispositif de protection contre l'incendie comporte une deuxième lèvre d'étanchéité (105), dans lequel la première lèvre d'étanchéité (104) dépasse vers l'extérieur, et dans lequel la deuxième lèvre d'étanchéité (105) dépasse vers l'intérieur.

7. Système selon l'une des revendications précédentes, **caractérisé en ce que** le dispositif de protection contre l'incendie comporte une troisième lèvre d'étanchéité (106), dans lequel la première lèvre d'étanchéité (104) est agencée au-dessus du matériau intumescent (103) et la troisième lèvre d'étanchéité (106) est agencée en dessous du matériau intumescent (103).

8. Système selon l'une des revendications précédentes, **caractérisé en ce que** le composant d'écoulement (101) présente une fente de réception, dans lequel la deuxième lèvre d'étanchéité (105) du dispositif de protection contre l'incendie est réalisée afin de pénétrer dans l'état agencé entre le composant d'écoulement (101) et le mur, le sol (100) ou le plafond du dispositif de protection contre l'incendie dans la fente de réception.
